# EUROPEAN PATENT APPLICATION

(11) **EP 4 831 834 A1**
(43) Date of publication of application: **28.10.2026**
(21) Application number: 24905792.8
(22) Date of filing: 17.10.2024
(51) Int. Cl.: G06F 16/78

(54) **MEDIA CONTENT FEEDBACK METHOD AND APPARATUS, ELECTRONIC DEVICE AND STORAGE MEDIUM**

(30) Priority: 20.12.2023 CN 202311766481
(71) Applicant: Beijing Zitiao Network Technology Co., Ltd., Beijing 100190 (CN)
(72) Inventor: ZHANG, Jiatong, Beijing 100028 (CN); YANG, Shaochuang, Beijing 100028 (CN); ZHANG, Peng, Beijing 100028 (CN); XIA, Zhao, Beijing 100028 (CN)
(74) Representative: Isarpatent
(86) International application number: PCT/CN2024/125540
(87) International publication number: WO 2025/130303

(57) **Abstract**

Embodiments of the present disclosure provide a feedback method and apparatus for media content, an electronic device, and a storage medium. The method includes: displaying, in response to a feedback item display operation for first media content, a plurality of content feedback items of the first media content in a content feedback dimension, where different content feedback items correspond to different content keywords of the first media content, and the content keywords are used to describe content information of the first media content; and displaying feedback prompt information in response to a feedback operation for a target content feedback item among the plurality of content feedback items, where the feedback prompt information is used to prompt an adjustment to a recommendation level of second media content, and content information of the second media content is described using a content keyword corresponding to the target content feedback item.

## Description

### CROSS-REFERENCE TO RELATED APPLICATION(S)

The present application claims priority to Chinese Patent Application No. 202311766481.2, filed on December 20, 2023 and entitled "MEDIA CONTENT FEEDBACK METHOD AND APPARATUS, ELECTRONIC DEVICE AND STORAGE MEDIUM", which is incorporated herein by reference in its entirety.

### FIELD

Embodiments of the present disclosure relate to the field of computer technology, and in particular to a feedback method and apparatus for media content, an electronic device, and a storage medium.

### BACKGROUND

Currently, on some platforms, users may view videos recommended by the platforms and provide feedback on the videos recommended by the platforms, e.g., feedback indicating dislike for a recommended video.

### SUMMARY

Embodiments of the present disclosure provide a feedback method and apparatus for media content, an electronic device, and a storage medium, to enrich feedback manners for videos.

According to a first aspect, an embodiment of the present disclosure provides a feedback method for media content. The method includes:
displaying, in response to a feedback item display operation for first media content, a plurality of content feedback items of the first media content in a content feedback dimension, where different content feedback items correspond to different content keywords of the first media content, and the content keywords are used to describe content information of the first media content; and
displaying feedback prompt information in response to a feedback operation for a target content feedback item among the plurality of content feedback items, where the feedback prompt information is used to prompt an adjustment to a recommendation level of second media content, and content information of the second media content is described using a content keyword corresponding to the target content feedback item.

According to a second aspect, an embodiment of the present disclosure further provides a feedback apparatus for media content. The apparatus includes:
a feedback item display module configured to display, in response to a feedback item display operation for first media content, a plurality of content feedback items of the first media content in a content feedback dimension, where different content feedback items correspond to different content keywords of the first media content, and the content keywords are used to describe content information of the first media content; and
a feedback prompt module configured to display feedback prompt information in response to a feedback operation for a target content feedback item among the plurality of content feedback items, where the feedback prompt information is used to prompt an adjustment to a recommendation level of second media content, and
content information of the second media content is described using a content keyword corresponding to the target content feedback item.

According to a third aspect, an embodiment of the present disclosure further provides an electronic device. The electronic device includes:
one or more processors; and
a memory configured to store one or more programs, where
the one or more programs, when executed by the one or more processors, cause the one or more processors to implement the feedback method for media content as described in the embodiments of the present disclosure.

According to a fourth aspect, an embodiment of the present disclosure further provides a computer-readable storage medium having a computer program stored thereon, where the program, when executed by a processor, causes the processor to implement the feedback method for media content as described in the embodiments of the present disclosure.

According to the feedback method and apparatus for media content, the electronic device, and the storage medium provided in the embodiments of the present disclosure, the plurality of content feedback items of the first media content in the content feedback dimension are displayed in response to the feedback item display operation for the first media content, where different content feedback items correspond to different content keywords of the first media content, and the content keywords are used to describe the content information of the first media content. The feedback prompt information is displayed in response to the feedback operation for the target content feedback item among the plurality of content feedback items, where the feedback prompt information is used to prompt the adjustment to the recommendation level of the second media content, and the content information of the second media content is described using the content keyword corresponding to the target content feedback item.

### BRIEF DESCRIPTION OF THE DRAWINGS

The foregoing and other features, advantages, and aspects of embodiments of the present disclosure become more apparent with reference to the following specific implementations and accompanying drawings. Throughout the accompanying drawings, the same or similar reference numerals denote the same or similar elements. It should be understood that the accompanying drawings are schematic and that parts and elements are not necessarily drawn to scale.
FIG. 1 is a schematic flowchart of a feedback method for media content according to an embodiment of the present disclosure;
FIG. 2 is a schematic diagram of display of content feedback items according to an embodiment of the present disclosure;
FIG. 3 is a schematic diagram of display of feedback prompt information according to an embodiment of the present disclosure;
FIG. 4 is a schematic flowchart of another feedback method for media content according to an embodiment of the present disclosure;
FIG. 5 is a structural block diagram of a feedback apparatus for media content according to an embodiment of the present disclosure; and
FIG. 6 is a schematic structural diagram of an electronic device according to an embodiment of the present disclosure.

### DETAILED DESCRIPTION OF EMBODIMENTS

Embodiments of the present disclosure will be described in more detail below with reference to the drawings. Although some embodiments of the present disclosure are shown in the drawings, it should be understood that the present disclosure may be implemented in various forms and should not be construed as being limited to the embodiments set forth herein. Rather, these embodiments are provided for a more thorough and complete understanding of the present disclosure. It should be understood that the drawings and the embodiments of the present disclosure are only for exemplary purposes, and are not intended to limit the scope of protection of the present disclosure.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect.

The terms "comprise" and "include" and variants thereof used herein indicate open inclusion, that is, "include but are not limited to". The term "based on" means "at least partially based on". The term "an embodiment" means "at least one embodiment". The term "another embodiment" means "at least one other embodiment". The term "some embodiments" means "at least some embodiments". Related definitions of the other terms will be given in the description below.

It should be noted that concepts such as "first" and "second" mentioned in the present disclosure are only used to distinguish different apparatuses, modules, or units, and are not used to limit the sequence of functions performed by these apparatuses, modules, or units or interdependence.

It should be noted that the modifiers "a", "an" and "a plurality of" mentioned in the present disclosure are illustrative and not restrictive, and those skilled in the art should understand that unless the context clearly indicates otherwise, the modifiers should be understood as "one or more".

The names of messages or information exchanged between a plurality of apparatuses in the implementations of the present disclosure are used for illustrative purposes only, and are not used to limit the scope of these messages or information.

It can be understood that before the use of the technical solutions disclosed in the embodiments of the present disclosure, a user shall be informed of a type, a range of use, a use scenario, etc., of personal information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure.

In an alternative but non-limiting implementation, in response to the reception of the active request from the user, the prompt information may be sent to the user in the form of, for example, a pop-up window, in which the prompt information may be presented in text. Furthermore, the pop-up window may further include a selection control for the user to choose whether to "agree" or "disagree" to provide the personal information to the electronic device.

It can be understood that the above-mentioned process of notifying and obtaining the authorization of the user is only illustrative and does not constitute a limitation on the implementations of the present disclosure, and other manners that satisfy the relevant laws and regulations may also be applied in the implementations of the present disclosure.

It can be understood that the data involved in the technical solutions (including, but not limited to, the data itself and the access to or use of the data) shall comply with the requirements of corresponding laws, regulations, and relevant provisions.

Currently, on some platforms, users can view videos recommended by the platforms and provide feedback on the videos recommended by the platforms, e.g., feedback indicating dislike for a recommended video. However, methods for providing feedback on videos are relatively limited, making it impossible for users to effectively provide feedback.

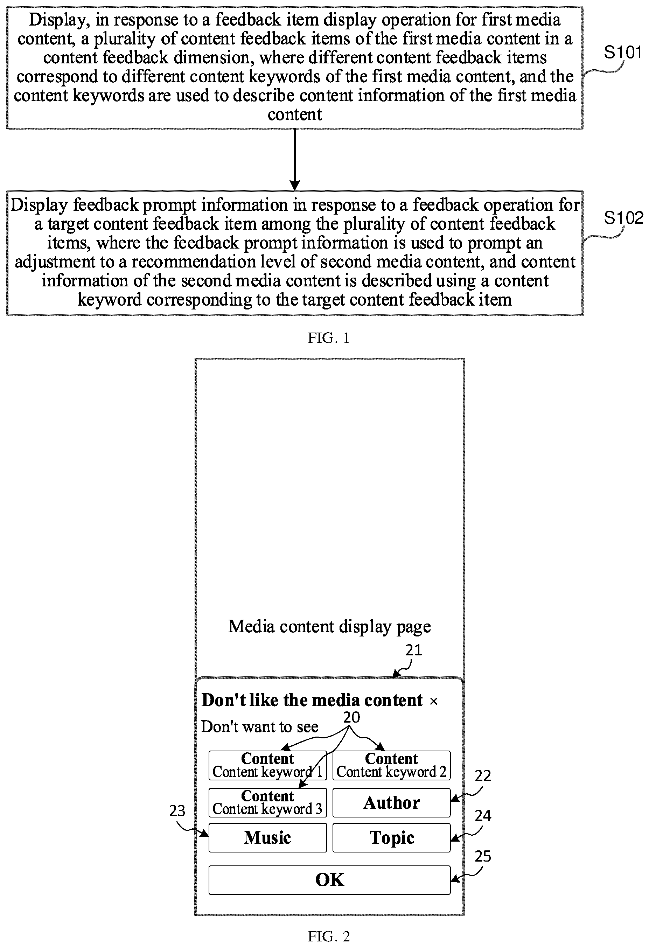

FIG. 1 is a schematic flowchart of a feedback method for media content according to an embodiment of the present disclosure. The method may be performed by a feedback apparatus for media content. The apparatus may be implemented by software and/or hardware, and may be configured in an electronic device, typically in a mobile phone or a tablet computer. The feedback method for media content according to this embodiment of the present disclosure is applicable to a scenario of providing feedback on media content, and in particular to a scenario of providing feedback on media content in a content dimension. As shown in FIG. 1, the feedback method for media content according to this embodiment may include the following steps.

At S101, in response to a feedback item display operation for first media content, a plurality of content feedback items of the first media content in a content feedback dimension are displayed, where different content feedback items correspond to different content keywords of the first media content, and the content keywords are used to describe content information of the first media content.

The feedback item display operation may be a trigger operation for indicating display of feedback items of media content, and a manner of performing the feedback item display operation is not limited herein. For example, the feedback item display operation may be an operation for triggering a feedback control for the media content. The feedback control may be configured to trigger feedback on the media content, e.g., feedback in a dimension of like or dislike for the media content.

The first media content may be understood as media content corresponding to a media content display operation, for example, the media content whose feedback item is to be displayed as indicated by the feedback item display operation, e.g., media content currently displayed on a media content display page. Optionally, the first media content is media content in a recommended media content stream. The recommended media content stream may be understood as a media content stream including recommended media content, which may be a media content stream on the media content display page. In this case, the first media content may be the recommended media content, for example, media content recommended by a current application or server to a current user.

The first media content may have one or more feedback dimensions, such as the content feedback dimension, an author feedback dimension, a topic feedback dimension, and/or a music feedback dimension. The content feedback dimension may be a feedback dimension for the content information of the media content, which may be used to provide feedback on the content information of the media content. The author feedback dimension may be a feedback dimension for an author of the media content (i.e., a poster of the media content), which may be used to provide feedback on the author of the media content. The topic feedback dimension may be a feedback dimension for a topic added to the media content, which may be used to provide feedback on the topic added to the media content. The music feedback dimension may be a feedback dimension for music used in the media content, which may be used to provide feedback on the music used in the media content. Here, for example, providing feedback may include providing positive feedback or negative feedback, e.g., feedback indicating like or dislike for a corresponding object. The corresponding object may include, for example, the content information, the author, the topic, and/or the music corresponding to the media content.

The content information of the media content may be information related to content of the media content, such as a theme or core content of the media content. Optionally, the content information includes a content subject and/or a content element. The content subject may be a subject of the media content. The content element may be an element included in the media content, such as a person, a location, a building, and/or a place appearing in the media content.

The content feedback items may be feedback items for providing feedback on the media content in the content feedback dimension. The feedback items may be, for example, options or trigger items for providing feedback. Different content feedback items may correspond to different content keywords of the first media content. The content keywords may be keywords used to describe the content information of the first media content, e.g., keywords used to describe the content theme or the core content of the first media content. Content keywords corresponding to different pieces of media content may be not completely the same or completely different, depending on specific content of the media content. The content keywords of the first media content may be generated based on the first media content.

Optionally, the content keywords are generated based on at least one of a media content image, media content audio, or media content text of the first media content; and/or the content keywords are generated by a keyword extraction model, where the keyword extraction model is configured on a client or a server. The media content image may be an image of the media content, such as an image frame (e.g., a video frame) and/or an image included in the media content. The media content audio may be audio data included in the media content. The media content text may be text content included in the media content, such as a title, a brief description, and/or subtitles of the media content. The keyword extraction module may be a model configured to extract the content keyword of the media content, and may be pre-trained and configured on the client or server. For example, after the first media content is posted, the client or server may input the first media content into the keyword extraction model, and the keyword extraction model obtains the media content image, the media content audio, and/or the media content text of the first media content through analysis. A plurality of content keywords of the first media content are generated based on the media content image, the media content audio, and/or the media content text, and then the plurality of content keywords generated are output.

Specifically, in the case of receiving the feedback item display operation for the first media content, e.g., in the case of detecting that the current user triggers the feedback control corresponding to the first media content, a plurality of content feedback items 20 of the first media content in the content feedback dimension may be displayed. For example, a feedback panel 21 for the first media content may be displayed, the plurality of content feedback items 20 of the first media content in the content feedback dimension may be displayed on the feedback panel 21, and in each content feedback item 20, a content keyword corresponding to the content feedback item 20 may be displayed, as shown in FIG. 2 (a negative feedback scenario is used as an example in the figure), to facilitate feedback from the current user on the first media content in the content feedback dimension, e.g., feedback indicating like or dislike for some content keywords of the first media content.

In this embodiment, when feedback items of the first media content are displayed to the current user in response to the feedback item display operation performed by the current user, the displayed feedback items may include, but are not limited to, the plurality of content feedback items 20 of the first media content in the content feedback dimension. For example, feedback items of the first media content in at least two feedback dimensions including the content feedback dimension may be displayed. For example, as shown in FIG. 2, the feedback items in the at least two feedback dimensions may include the plurality of content feedback items 20 of the first media content in the content feedback dimension, an author feedback item 22 of the first media content in the author feedback dimension, one or more music feedback items 23 of the first media content in the music feedback dimension, and/or one or more topic feedback items 24 of the first media content in the topic feedback dimension, to facilitate feedback from the current user on the first media content in different feedback dimensions such as the content feedback dimension, the author feedback dimension, the music feedback dimension, and/or the topic feedback dimension.

When the first media content includes a plurality of pieces of music, the first media content may include a plurality of music feedback items in the music feedback dimension, where different music feedback items may correspond to different pieces of music included in the first media content, to allow the user to express their like or dislike for corresponding music. When identifiers of a plurality of topics are added to the first media content, the first media content may have a plurality of topic feedback items in the topic feedback dimension, where different topic feedback items may correspond to different topics added to the first media content, to allow the user to express their like or dislike for corresponding topics.

In the case of displaying the feedback items of the first media content in the at least two feedback dimensions, feedback items in different feedback dimensions and the plurality of content feedback items in the content feedback dimension may be displayed in the same or different sorting manners. Optionally, displaying the plurality of content feedback items of the first media content in the content feedback dimension includes: displaying the feedback items of the first media content in the at least two feedback dimensions, where the at least two feedback dimensions include the content feedback dimension, and feedback items in different feedback dimensions and the plurality of content feedback items in the content feedback dimension are displayed in different sorting manners. For example, feedback items in different feedback dimensions may be arranged and displayed in a preset fixed sorting manner. For example, as shown in FIG. 2, feedback items in different feedback dimensions may be displayed in an order of the content feedback dimension - the author feedback dimension - the music feedback dimension - the topic feedback dimension. Additionally or optionally, the plurality of content feedback items in the content feedback dimension may be arranged and displayed in another preset fixed sorting manner or a sorting manner corresponding to the current user. This enables the user to quickly locate a feedback dimension that the current user wants to view and then provide feedback, reducing time costs in feedback for the user.

In this embodiment, the plurality of content feedback items of the first media content in the content feedback dimension may be displayed in response to the feedback item display operation of the current user on the first media content. The order of displaying the plurality of content feedback items may be flexibly set as needed. Optionally, displaying the plurality of content feedback items of the first media content in the content feedback dimension includes: displaying the plurality of content feedback items of the first media content in the content feedback dimension in a preset order; or, displaying the plurality of content feedback items of the first media content in the content feedback dimension in an order corresponding to the current user. As such, methods for displaying the content feedback items are further enriched.

For example, the preset order of displaying the content feedback items may be set in advance. As such, when the feedback item display operation is received, the plurality of content feedback items of the first media content in the content feedback dimension may be displayed in the preset order. Alternatively, the plurality of content feedback items of the first media content in the content feedback dimension may be displayed in the order corresponding to the current user. For example, the plurality of content feedback items of the first media content in the content feedback dimension are displayed according to a display order or priorities set by the current user, and/or historical feedback counts of the current user. In this case, when different users view content feedback items of the same media content, the content feedback items of the media content may be displayed in different orders.

It should be noted that preferences of the user generally do not change significantly in a short period of time. That is, content keywords liked or disliked by the user generally do not change significantly in a short period of time. With the full authorization of the user, the historical feedback counts of the user for different content keywords (i.e., content feedback items) may be obtained, and the plurality of content feedback items of the first media content in the content feedback dimension may be displayed in descending order of the historical feedback counts of the user for the content keywords. For example, assuming that the first media content includes three content keywords: "life of mother-in-law and daughter-in-law", "rural life", and "homemade meal", if the current user historically provides feedback indicating no interest in the "homemade meal" three times, feedback indicating no interest in the "life of mother-in-law and daughter-in-law" once, and feedback indicating no interest in the "rural life" zero times in n days, the three content keywords of the first media content may be displayed in an order of the "homemade meal" - the "life of mother-in-law and daughter-in-law" - the "rural life", to facilitate a quick location by the current user.

In this case, optionally, displaying the plurality of content feedback items of the first media content in the content feedback dimension in the order corresponding to the current user includes: displaying the plurality of content feedback items of the first media content in the content feedback dimension in descending order of the historical feedback counts, where the historical feedback counts refer to numbers of times that the current user historically provides feedback for the content feedback items.

A historical feedback count for a content feedback item may be understood as a number of times that the user selects the content feedback item and provides feedback prior to a current moment or within a last preset time length (e.g., n days).

At S102, feedback prompt information is displayed in response to a feedback operation for a target content feedback item among the plurality of content feedback items, where the feedback prompt information is used to prompt an adjustment to a recommendation level of second media content, and content information of the second media content is described using a content keyword corresponding to the target content feedback item.

The feedback operation may be an operation used to specify providing feedback on one or more content feedback items, e.g., an operation of triggering an confirmation control after selecting one or more content feedback items. The feedback operation may include a positive feedback operation and/or a negative feedback operation. The positive feedback operation may be used to provide positive feedback on the first media content, e.g., to express like for a content keyword corresponding to a corresponding content feedback item or express an interest in a content keyword corresponding to a corresponding content feedback item. In contrast, the negative feedback operation may be used to provide negative feedback on the first media content, e.g., to express dislike for the content keyword corresponding to the corresponding content feedback item or express no interest in the content keyword corresponding to the corresponding content feedback item.

The target content feedback item may be a content feedback item corresponding to the feedback operation, i.e., a content feedback to be fed back as indicated by the feedback operation, e.g., a content feedback item in a selected state. The content information of the second media content may be described using the content keyword corresponding to the target content feedback item. For example, a content keyword of the second media content may include at least one content keyword corresponding to the target content feedback item. The feedback prompt information may be information used to prompt the adjustment to the recommendation level of the second media content.

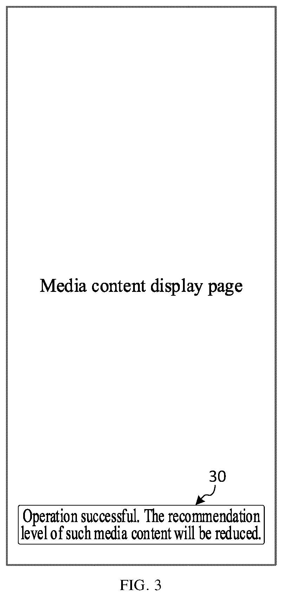

Exemplarily, in a case that the feedback operation for the target content feedback item among the content feedback items is received, e.g., when it is detected that the current user triggers an confirmation control 25 (as shown in FIG. 2) after selecting one or more content feedback items, the content feedback item 20 of the first media content may stop being displayed, for example, the feedback panel 21 stops being displayed, and feedback prompt information 30 may be displayed, as shown in FIG. 3 (a negative feedback scenario is used as an example in the figure). With the feedback prompt information, the current user is informed that the feedback succeeds and the recommendation of media content (i.e., the second media content) of the type corresponding to the target feedback item is to be adjusted.

The feedback method for media content provided in this embodiment includes: displaying the plurality of content feedback items of the first media content in the content feedback dimension in response to the feedback item display operation for the first media content, where different content feedback items correspond to different content keywords of the first media content, and the content keywords are used to describe the content information of the first media content; and displaying the feedback prompt information in response to the feedback operation for the target content feedback item among the plurality of content feedback items, where the feedback prompt information is used to prompt the adjustment to the recommendation level of the second media content, and the content information of the second media content is described using the content keyword corresponding to the target content feedback item. With the above-mentioned technical solution, this embodiment supports the user in providing feedback for different content keywords in the content feedback dimension, so that the feedback granularity in the content feedback dimension can be refined, methods for providing feedback on media content can be enriched, and the effect of providing feedback on media content ca be improved.

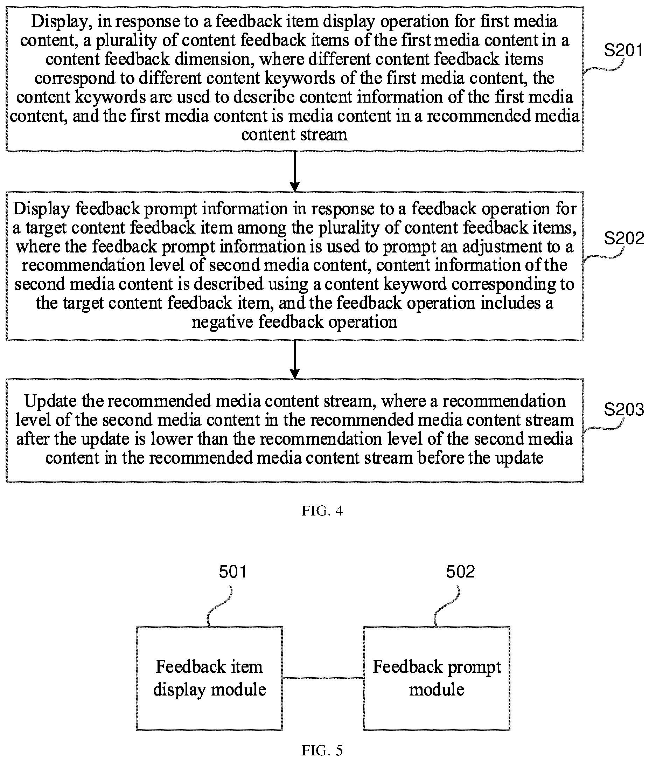

FIG. 4 is a schematic flowchart of another feedback method for media content according to an embodiment of the present disclosure. The solution in this embodiment may be combined with one or more optional solutions in the above-described embodiment. Optionally, the first media content is the media content in the recommended media content stream, and the feedback operation includes the negative feedback operation. The feedback method for media content according to this embodiment further includes: updating the recommended media content stream, where a recommendation level of the second media content in the recommended media content stream after the update is lower than the recommendation level of the second media content in the recommended media content stream before the update.

Correspondingly, as shown in FIG. 4, the feedback method for media content according to this embodiment may include the following steps.

At S201, in response to a feedback item display operation for first media content, a plurality of content feedback items of the first media content in a content feedback dimension are displayed, where different content feedback items correspond to different content keywords of the first media content, the content keywords are used to describe content information of the first media content, and the first media content is media content in a recommended media content stream.

At S202, feedback prompt information is displayed in response to a feedback operation for a target content feedback item among the plurality of content feedback items, where the feedback prompt information is used to prompt an adjustment to a recommendation level of second media content, content information of the second media content is described using a content keyword corresponding to the target content feedback item, and the feedback operation includes a negative feedback operation.

At S203, the recommended media content stream is updated, where a recommendation level of the second media content in the recommended media content stream after the update is lower than the recommendation level of the second media content in the recommended media content stream before the update.

In this embodiment, when it is detected that a user performs the feedback operation for the target content feedback item, the recommendation level of the second media content may be further adjusted based on the feedback operation performed by the user. For example, a recommendation weight, a recommendation priority, a recommendation ratio, and/or a recommendation amount of the second media content in the recommended media content stream are/is adjusted.

For example, the feedback operation performed by the user may be used to indicate the adjustment to the recommendation level of the second media content. For example, when the feedback operation performed by the user is a positive feedback operation, the positive feedback operation may be used to indicate an increase in the recommendation level of the second media content. When the feedback operation performed by the user is a negative feedback operation, the negative feedback operation may be used to indicate a reduction in the recommendation level of the second media content. In this way, during subsequent construction or update of the recommended media content stream, the amount of the second media content included in the recommended media content stream may be determined based on an adjusted recommendation level of the second media content.

An example where the feedback operation is the negative feedback operation is considered. When it is detected that the current user performs the feedback operation for the target content feedback item, the recommended media content stream in which the first media content is located may be updated, to reduce the recommendation level of the second media content in the media content stream, e.g., reduce the recommendation weight, the recommendation priority, the recommendation ratio, and/or the recommendation amount of the second media content in the recommended media content stream. Timing of updating the recommended media content stream is not limited. For example, the recommended media content stream may be updated when the feedback operation of the current user on the target content feedback item is received, when one or more pieces of media content in the recommended media content stream are preloaded, or when an update operation of the current user on the recommended media content stream is received, which may be specifically set as needed.

According to the feedback method for media content provided in this embodiment, based on the negative feedback operation of the user on the one or more content feedback items, the recommendation level of media content having content keywords corresponding to the one or more content feedback items is reduced, so that a feedback granularity in the content feedback dimension can be refined, and the effect of adjusting the recommendation level of the media content can be improved.

FIG. 5 is a structural block diagram of a feedback apparatus for media content according to an embodiment of the present disclosure. The apparatus may be implemented by software and/or hardware, may be configured in an electronic device, typically in a mobile phone or a tablet computer, and may provide feedback on media content by performing the feedback method for media content, e.g., provide feedback on the media content in a content dimension. As shown in FIG. 5, the feedback apparatus for media content according to this embodiment may include: a feedback item display module 501 and a feedback prompt module 502.

The feedback item display module 501 is configured to display, in response to a feedback item display operation for first media content, a plurality of content feedback items of the first media content in a content feedback dimension, where different content feedback items correspond to different content keywords of the first media content, and the content keywords are used to describe content information of the first media content.

The feedback prompt module 502 is configured to display feedback prompt information in response to a feedback operation for a target content feedback item among the plurality of content feedback items, where the feedback prompt information is used to prompt an adjustment to a recommendation level of second media content, and content information of the second media content is described using a content keyword corresponding to the target content feedback item.

The feedback apparatus for media content according to this embodiment displays the plurality of content feedback items of the first media content in the content feedback dimension via the feedback item display module in response to the feedback item display operation for the first media content, where different content feedback items correspond to different content keywords of the first media content, and the content keywords are used to describe the content information of the first media content; and displays the feedback prompt information via the feedback prompt module in response to the feedback operation for the target content feedback item among the plurality of content feedback items, where the feedback prompt information is used to prompt the adjustment to the recommendation level of the second media content, and the content information of the second media content is described using the content keyword corresponding to the target content feedback item. With the above-mentioned technical solution, this embodiment supports a user in providing feedback for different content keywords in the content feedback dimension, so that a feedback granularity in the content feedback dimension can be refined, methods for providing feedback on media content can be enriched, and the effect of providing feedback on media content can be improved.

Optionally, the content information includes a content subject and/or a content element.

Optionally, the feedback item display module 501 may be specifically configured to: display feedback items of the first media content in at least two feedback dimensions, where the at least two feedback dimensions include the content feedback dimension, and feedback items in different feedback dimensions and the plurality of content feedback items in the content feedback dimension are displayed in different sorting manners.

Optionally, the feedback item display module 501 includes: a first display unit configured to display the plurality of content feedback items of the first media content in the content feedback dimension in a preset order; or a second display unit configured to display the plurality of content feedback items of the first media content in the content feedback dimension in an order corresponding to a current user.

Optionally, the second display unit may be specifically configured to: display the plurality of content feedback items of the first media content in the content feedback dimension in descending order of historical feedback counts, where the historical feedback counts are numbers of times that the current user historically provides feedback for the content feedback items.

Optionally, the first media content is media content in a recommended media content stream, and the feedback operation includes a negative feedback operation. The apparatus for media content feedback according to this embodiment may further include: an update module configured to update the recommended media content stream, where a recommendation level of the second media content in the recommended media content stream after update is lower than the recommendation level of the second media content in the recommended media content stream before update.

Optionally, the content keywords are generated based on at least one of a media content image, media content audio, or media content text of the first media content; and/or the content keywords are generated by a keyword extraction model, where the keyword extraction model is configured on a client or a server.

The feedback apparatus for media content according to this embodiment of the present disclosure may perform the feedback method for media content according to any one of the embodiments of the present disclosure, and has corresponding functional modules and beneficial effects for performing the feedback method for media content. For the technical details not explicitly described in this embodiment, reference may be made to the feedback method for media content according to any embodiment of the present disclosure.

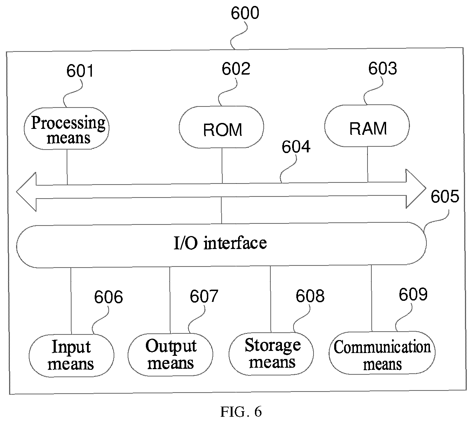

Reference is made to FIG. 6 below, which is a schematic structural diagram of an electronic device (such as a terminal device) 600 suitable for implementing an embodiment of the present disclosure. The terminal device in this embodiment of the present disclosure may include, but is not limited to, mobile terminals such as a mobile phone, a notebook computer, a digital broadcast receiver, a personal digital assistant (PDA), a PAD (tablet computer), a portable multimedia player (PMP), and a vehicle-mounted terminal (e.g., a vehicle navigation terminal), and fixed terminals such as a digital TV and a desktop computer. The electronic device shown in FIG. 6 is merely an example, and shall not impose any limitation on the function and scope of use of the embodiments of the present disclosure.

As shown in FIG. 6, the electronic device 600 may include a processing means (for example, a central processing unit or a graphics processing unit) 601 that may perform a variety of appropriate actions and processing in accordance with a program stored in a read-only memory (ROM) 602 or a program loaded from a storage means 608 into a random-access memory (RAM) 603. The RAM 603 further stores various programs and data required for the operation of the electronic device 600. The processing means 601, the ROM 602, and the RAM 603 are connected to one another through a bus 604. An input/output (I/O) interface 605 is also connected to the bus 604.

Generally, the following means may be connected to the I/O interface 605: an input means 606 including, for example, a touchscreen, a touchpad, a keyboard, a mouse, a camera, a microphone, an accelerometer, and a gyroscope; an output means 607 including, for example, a liquid crystal display (LCD), a speaker, and a vibrator; the storage means 608 including, for example, a magnetic tape and a hard disk drive; and a communication means 609. The communication means 609 may allow the electronic device 600 to perform wireless or wired communication with other devices to exchange data. Although FIG. 6 shows the electronic device 600 having various means, it should be understood that it is not required to implement or have all of the shown means. It may be an alternative to implement or have more or fewer means.

In particular, according to the embodiments of the present disclosure, the process described above with reference to the flowchart may be implemented as a computer software program. For example, an embodiment of the present disclosure includes a computer program product, which includes a computer program carried on a non-transitory computer-readable medium, where the computer program includes program code for performing the method shown in the flowchart. In such an embodiment, the computer program may be downloaded and installed from a network through the communication means 609, installed from the storage means 608, or installed from the ROM 602. When the computer program is executed by the processing means 601, the above-mentioned functions defined in the method of the embodiments of the present disclosure are performed.

It should be noted that the above-mentioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk drive, a random-access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may alternatively be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), and the like, or any suitable combination thereof.

In some implementations, a client and a server may communicate using any currently known or future-developed network protocol such as the Hypertext Transfer Protocol (HTTP), and may be connected to digital data communication (for example, a communication network) in any form or medium. Examples of the communication network include a local area network ("LAN"), a wide area network ("WAN"), an internetwork (for example, the Internet), a peer-to-peer network (for example, an ad hoc peer-to-peer network), and any currently known or future-developed network.

The above-mentioned computer-readable medium may be included in the above-mentioned electronic device. Alternatively, the computer-readable medium may exist independently, without being assembled into the electronic device.

The computer-readable medium carries one or more programs that, when executed by the electronic device, cause the electronic device to: display, in response to a feedback item display operation for first media content, a plurality of content feedback items of the first media content in a content feedback dimension, where different content feedback items correspond to different content keywords of the first media content, and the content keywords are used to describe content information of the first media content; and display feedback prompt information in response to a feedback operation for a target content feedback item among the plurality of content feedback items, where the feedback prompt information is used to prompt an adjustment to a recommendation level of second media content, and content information of the second media content is described using a content keyword corresponding to the target content feedback item.

Computer program code for performing operations of the present disclosure can be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. The name of a module does not constitute a limitation on the unit itself in some cases.

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk drive, a random-access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

According to one or more embodiments of the present disclosure, Example 1 provides a feedback method for media content, including:
displaying, in response to a feedback item display operation for first media content, a plurality of content feedback items of the first media content in a content feedback dimension, where different content feedback items correspond to different content keywords of the first media content, and the content keywords are used to describe content information of the first media content; and
displaying feedback prompt information in response to a feedback operation for a target content feedback item among the plurality of content feedback items, where the feedback prompt information is used to prompt an adjustment to a recommendation level of second media content, and content information of the second media content is described using a content keyword corresponding to the target content feedback item.

According to one or more embodiments of the present disclosure, Example 2 provides the method of Example 1, where the content information includes a content subject and/or a content element.

According to one or more embodiments of the present disclosure, Example 3 provides the method of Example 1, where displaying the plurality of content feedback items of the first media content in the content feedback dimension includes:
displaying feedback items of the first media content in at least two feedback dimensions, where the at least two feedback dimensions include the content feedback dimension, and feedback items in different feedback dimensions and the plurality of content feedback items in the content feedback dimension are displayed in different sorting manners.

According to one or more embodiments of the present disclosure, Example 4 provides the method of Example 1, where displaying the plurality of content feedback items of the first media content in the content feedback dimension includes:
displaying the plurality of content feedback items of the first media content in the content feedback dimension in a preset order; or
displaying the plurality of content feedback items of the first media content in the content feedback dimension in an order corresponding to a current user.

According to one or more embodiments of the present disclosure, Example 5 provides the method of Example 4, where displaying the plurality of content feedback items of the first media content in the content feedback dimension in the order corresponding to the current user includes:
displaying the plurality of content feedback items of the first media content in the content feedback dimension in descending order of historical feedback counts, where the historical feedback counts are numbers of times that the current user historically provides feedback for the content feedback items.

According to one or more embodiments of the present disclosure, Example 6 provides the method of any of Examples 1 to 5, where the first media content is media content in a recommended media content stream, the feedback operation includes a negative feedback operation, and the method further includes:
updating the recommended media content stream, where a recommendation level of the second media content in the recommended media content stream after update is lower than the recommendation level of the second media content in the recommended media content stream before update.

According to one or more embodiments of the present disclosure, Example 7 provides the method of any of Examples 1 to 5, where the content keywords are generated based on at least one of a media content image, media content audio, or media content text of the first media content; and/or the content keywords are generated by a keyword extraction model, where the keyword extraction model is configured on a client or a server.

According to one or more embodiments of the present disclosure, Example 8 provides a feedback apparatus for media content, including:
a feedback item display module configured to display, in response to a feedback item display operation for first media content, a plurality of content feedback items of the first media content in a content feedback dimension, where different content feedback items correspond to different content keywords of the first media content, and the content keywords are used to describe content information of the first media content; and
a feedback prompt module configured to display feedback prompt information in response to a feedback operation for a target content feedback item among the plurality of content feedback items, where the feedback prompt information is used to prompt an adjustment to a recommendation level of second media content, and content information of the second media content is described using a content keyword corresponding to the target content feedback item.

According to one or more embodiments of the present disclosure, Example 9 provides an electronic device, including:
one or more processors; and
a memory configured to store one or more programs, where
the one or more programs, when executed by the one or more processors, cause the one or more processors to implement the feedback method for media content according to any of Examples 1 to 7.

According to one or more embodiments of the present disclosure, Example 10 provides a computer-readable storage medium having a computer program stored thereon, where the program, when executed by a processor, causes the feedback method for media content according to any of Examples 1 to 7 to be implemented.

The above-mentioned descriptions are merely preferred embodiments of the present disclosure and explanations of the applied technical principles. Those skilled in the art should understand that the scope of disclosure involved in the present disclosure is not limited to the technical solutions formed by specific combinations of the above-mentioned technical features, and shall also cover other technical solutions formed by any combination of the above-mentioned technical features or equivalent features thereof without departing from the above-mentioned disclosed concept. For example, a technical solution formed by a replacement of the above-mentioned features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the above-mentioned discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely example forms of implementing the claims.

## Claims

1. A feedback method for media content, comprising:
displaying, in response to a feedback item display operation for first media content, a plurality of content feedback items of the first media content in a content feedback dimension, wherein different content feedback items correspond to different content keywords of the first media content, and the content keywords are used to describe content information of the first media content; and
displaying feedback prompt information in response to a feedback operation for a target content feedback item among the plurality of content feedback items, wherein the feedback prompt information is used to prompt an adjustment to a recommendation level of second media content, and the content information of the second media content is described using a content keyword corresponding to the target content feedback item.

2. The method according to claim 1, wherein the content information comprises a content subject and/or a content element.

3. The method according to claim 1, wherein displaying the plurality of content feedback items of the first media content in the content feedback dimension comprises:
displaying feedback items of the first media content in at least two feedback dimensions, wherein the at least two feedback dimensions comprise the content feedback dimension, and feedback items in different feedback dimensions and the plurality of content feedback items in the content feedback dimension are displayed in different sorting manners.

4. The method according to claim 1, wherein displaying the plurality of content feedback items of the first media content in the content feedback dimension comprises:
displaying the plurality of content feedback items of the first media content in the content feedback dimension in a preset order; or
displaying the plurality of content feedback items of the first media content in the content feedback dimension in an order corresponding to a current user.

5. The method according to claim 4, wherein displaying the plurality of content feedback items of the first media content in the content feedback dimension in the order corresponding to the current user comprises:
displaying the plurality of content feedback items of the first media content in the content feedback dimension in descending order of historical feedback counts, wherein the historical feedback counts are numbers of times that the current user historically provides feedback for the content feedback items.

6. The method according to any of claims 1 to 5, wherein the first media content is media content in a recommended media content stream, the feedback operation comprises a negative feedback operation, and the method further comprises:
updating the recommended media content stream, wherein a recommendation level of the second media content in the recommended media content stream after update is lower than the recommendation level of the second media content in the recommended media content stream before update.

7. The method according to any of claims 1 to 5, wherein the content keywords are generated based on at least one of a media content image, media content audio, or media content text of the first media content; and/or the content keywords are generated by a keyword extraction model, wherein the keyword extraction model is configured on a client or a server.

8. A feedback apparatus for media content, comprising:
a feedback item display module configured to display, in response to a feedback item display operation for first media content, a plurality of content feedback items of the first media content in a content feedback dimension, wherein different content feedback items correspond to different content keywords of the first media content, and the content keywords are used to describe content information of the first media content; and
a feedback prompt module configured to display feedback prompt information in response to a feedback operation for a target content feedback item among the plurality of content feedback items, wherein the feedback prompt information is used to prompt an adjustment to a recommendation level of second media content, and content information of the second media content is described using a content keyword corresponding to the target content feedback item.

9. An electronic device, comprising:
at least one processor; and
a memory, communicatively connected to the at least one processor, wherein
the memory stores a computer program executable by the at least one processor, and the computer program, when executed by the at least one processor, causes the at least one processor to perform the feedback method for media content according to any of claims 1 to 7.

10. A computer-readable storage medium, storing computer instructions that, when executed by a processor, cause the feedback method for media content according to any of claims 1 to 7 to be implemented.
